(19) Europäisches Patentamt / European Patent Office / Office européen des brevets

(11) **EP 4 316 742 B1**

(12) **EUROPEAN PATENT SPECIFICATION**

(45) Date of publication and mention
of the grant of the patent:
**29.04.2026  Bulletin 2026/18**

(21) Application number: **23159001.9**

(22) Date of filing: **28.02.2023**

(51) International Patent Classification (IPC):
**B25J 9/16** *(2006.01)*    **G06T 1/00** *(2006.01)*
**G06T 7/73** *(2017.01)*

(52) Cooperative Patent Classification (CPC):
**B25J 9/1612; B25J 9/1697; G06T 1/0014;**
**G06T 7/73;** G05B 2219/37425; G05B 2219/39484;
G05B 2219/39543; G05B 2219/40532;
G06T 2207/10024; G06T 2207/10028;
G06T 2207/20081; G06T 2207/20084;
G06T 2207/30164

(54) **OBJECT MANIPULATION APPARATUS, HANDLING METHOD, AND COMPUTER PROGRAM**

OBJEKTMANIPULATIONSVORRICHTUNG, HANDHABUNGSVERFAHREN UND COMPUTERPROGRAMM

APPAREIL DE MANIPULATION D'OBJET, PROCÉDÉ DE MANIPULATION ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **01.08.2022   JP 2022122589**

(43) Date of publication of application:
**07.02.2024  Bulletin 2024/06**

(73) Proprietor: **KABUSHIKI KAISHA TOSHIBA**
**Kawasaki-shi, Kanagawa 212-0013 (JP)**

(72) Inventor: **JIANG, Ping**
**Tokyo, 105-0023 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 633 610**

- XU YULIN ET AL: "GraspCNN: Real-Time Grasp Detection Using a New Oriented Diameter Circle Representation", IEEE ACCESS, vol. 7, 13 November 2019 (2019-11-13), pages 159322 - 159331, XP011754201, DOI: 10.1109/ ACCESS.2019.2950535
- ZHANG JUNHAO ET AL: "Grasp for Stacking via Deep Reinforcement Learning", 2020 IEEE INTERNATIONAL CONFERENCE ON ROBOTICS AND AUTOMATION (ICRA), IEEE, 31 May 2020 (2020-05-31), pages 2543 - 2549, XP033826846, DOI: 10.1109/ICRA40945.2020.9197508

**Description**

FIELD

Embodiments described herein relate generally to an object manipulation apparatus, a handling method, and a computer program.

BACKGROUND

A robot system has been conventionally known, which automates an object handling work, such as a picking automation system for handling baggage or the like stacked in a physical distribution warehouse.

Such a robot system automatically calculates a grasping position or posture of an object and a boxing position and posture of an input destination on the basis of sensor data, such as image information, and actually executes grasping or boxing by a robot having a manipulation planning mechanism.

In recent years, with the development of a machine learning technology, a technology of realizing appropriate actuation of a robot by learning has been used.

However, in the technology according to the related art, it is difficult to more effectively utilize an intermediate feature obtained by a neural network and more appropriately control operation of an object manipulation apparatus with a smaller calculation amount.

XU YULIN ET AL: "GraspCNN: Real-Time Grasp Detection Using a New Oriented Diameter Circle Representation", IEEE ACCESS, vol. 7, pages 159322-159331, discusses GraspCNN, an approach to grasp detection where a feasible robotic grasp is detected as an oriented diameter circle in RGB image, using a single convolutional neural network.

BRIEF DESCRIPTION OF THE DRAWINGS

FIG. 1 is a schematic diagram illustrating an example of a configuration of a system for object manipulation task according to an embodiment;
FIG. 2 is a diagram illustrating an example of a functional configuration of a controller according to the embodiment;
FIG. 3 is a diagram illustrating an example of a functional configuration of a planning unit according to the embodiment;
FIG. 4 is a diagram illustrating an example of a grasp configuration (GC) according to the embodiment;
FIG. 5 is a diagram illustrating an example of a functional configuration of a GC candidate calculation unit according to the embodiment;
FIG. 6 is a diagram illustrating an example of processing in a feature calculation unit according to the embodiment;
FIG. 7 is a diagram illustrating an example of processing in a GC region calculation unit according to the embodiment;
FIG. 8 is a flowchart illustrating an example of a handling method according to the embodiment; and
FIG. 9 is a diagram illustrating an example of a hardware configuration of the controller according to the embodiment.

DETAILED DESCRIPTION

The mentioned problems are solved by the subject-matter of the independent claims. Further preferred embodiments are defined in the dependent claims. Subject matter discussed throughout the following but not falling under the scope of the claims does not form part of the invention.

Exemplary embodiments of an object manipulation apparatus, a handling method, and a computer program will be explained below in detail with reference to the accompanying drawings.

First Embodiment

First, an outline of a system for object manipulation task including an object manipulation apparatus (picking robot), which is an example of an object manipulation robot, and a robot integrated management system will be described.

General Outline

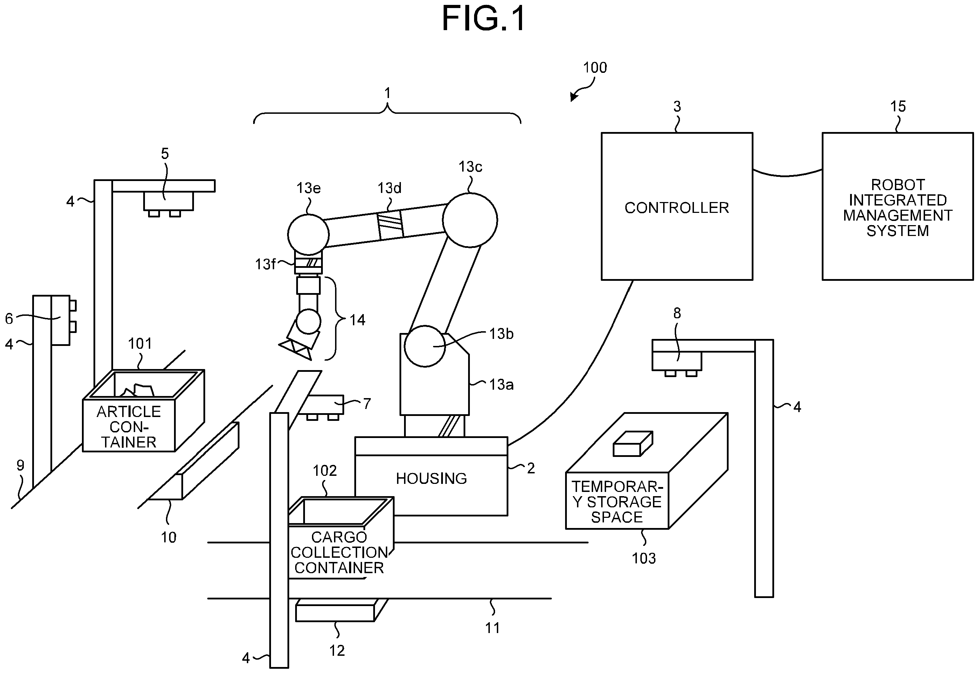

FIG. 1 is a schematic diagram illustrating an example of a configuration of a system for object manipulation task 100 according to the embodiment. The system for object manipulation task 100 according to the embodiment includes an object manipulation apparatus (a manipulator 1, a housing 2, and a controller 3), a sensor support portion 4, an article container sensor 5, a grasped article measuring sensor 6, a cargo collection container sensor 7, a temporary storage space sensor 8, an article container drawing portion 9, an article container weighing machine 10, a cargo collection container drawing portion 11, and a cargo collection container weighing machine 12.

The sensor support portion 4 supports sensors (the article container sensor 5, the grasped article measuring sensor 6, the cargo collection container sensor 7, and the temporary storage space sensor 8).

The article container sensor 5 measures an internal state of an article container 101. The article container sensor 5 is, for example, an image sensor installed above the article container drawing portion 9.

The grasped article measuring sensor 6 is installed in the vicinity of the article container sensor 5, and measures an object grasped by the manipulator 1.

The cargo collection container sensor 7 measures an internal state of a cargo collection container. The cargo collection container sensor 7 is, for example, an image sensor installed above the cargo collection container drawing portion 11.

The temporary storage space sensor 8 measures an article put on a temporary storage space 103.

The article container drawing portion 9 draws the article container 101 in which target articles to be handled are stored.

The article container weighing machine 10 measures a weight of the article container 101.

The cargo collection container drawing portion 11 draws a cargo collection container 102 that contains articles taken out by the manipulator 1.

The cargo collection container weighing machine 12 measures a weight of the cargo collection container 102.

The article container sensor 5, the grasped article measuring sensor 6, the cargo collection container sensor 7, and the temporary storage space sensor 8 may be optional sensors. For example, sensors capable of acquiring image information, three-dimensional information and the like, such as an RGB image camera, a range image camera, a laser range finder, and a Light Detection and Ranging or Laser Imaging Detection and Ranging (LiDAR) can be used.

Note that, although not illustrated in the schematic diagram of FIG. 1, the system for object manipulation task 100 according to the embodiment includes, in addition to the components described above, various sensors, a power supply unit for operating various drive units, a cylinder for storing compressed air, a compressor, a vacuum pump, a controller, an external interface such as a user interface (UI), and a safety mechanism such as a light curtain or a collision detector.

The manipulator 1 includes an arm portion and a handling (picking) tool portion 14.

The arm portion is an articulated robot that is driven by a plurality of servo motors. The articulated robot, whose typical example is a vertical articulated robot of six axes (axes 13a to 13f) as illustrated in FIG. 1, is configured by a combination of a multi-axis vertical articulated robot, a SCARA robot, a linear motion robot and the like.

The handling tool portion 14 includes a force sensor and a pinching mechanism. The handling tool portion 14 grasps a grasping target object.

A robot integrated management system 15 is a system that manages the system for object manipulation task 100. The handling tool portion 14 can be attached to and detached from the arm portion that grasps the grasping target object, by using a handling tool changer. The handling tool portion 14 can be replaced with an optional handling tool portion 14 in accordance with an instruction from the robot integrated management system 15.

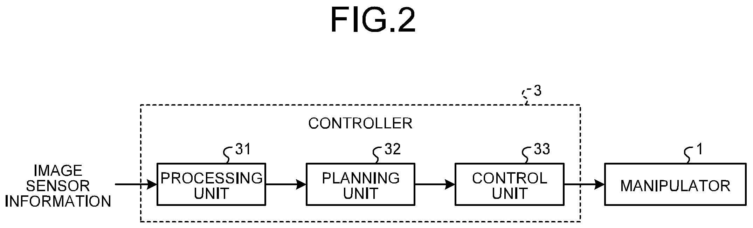

FIG. 2 is a diagram illustrating an example of a functional configuration of the controller 3 according to the embodiment. The controller 3 according to the embodiment includes a processing unit 31, a planning unit 32, and a control unit 33.

The processing unit 31 performs noise removal processing on image sensor information captured by the camera, background removal processing on information other than an object (for example, the article container and the ground), image resizing for generating an image to be input to the planning unit 32, and normalization processing. For example, the processing unit 31 inputs an RGB-D image to the planning unit 32 as processed image sensor information.

The planning unit 32 calculates, by deep learning, a candidate group of grasp configurations (GC) of the handling tool portion 14 in an image coordinate system, which has a highly possibility of success for grasping target object. The planning unit 32 converts each candidate into a 6D grasping posture in the world coordinate system. The 6D grasping posture includes three-dimensional coordinates indicating a position and three-dimensional coordinates indicating a orientation. The planning unit 32 evaluates a score of grasping easiness of each 6D grasping posture candidate and then calculates a candidate group having higher scores of easiness or the optimal candidate. Moreover, the planning unit 32 generates a trajectory from an initial posture of the manipulator 1 to grasp postures of candidates in the candidate group with higher scores or the grasp posture of the optimal candidate, and transmits the trajectory to the control unit 33.

The control unit 33 generates a time series of a position, a velocity, and an acceleration of each joint of the manipulator 1 on the basis of the trajectory received from the planning unit 32, and controls a behavior of causing the manipulator 1 to grasp the grasping target object. In addition, the control unit 33 makes the controller 3 repeatedly function until the grasping operation succeeds or an upper limit of the number of times of operation execution is reached.

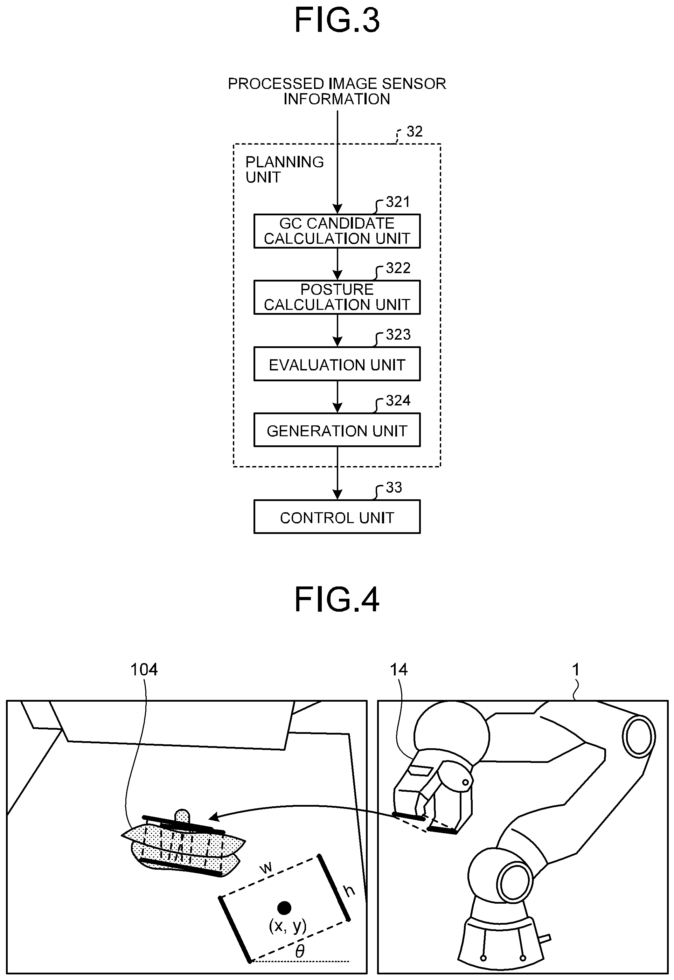

FIG. 3 is a diagram illustrating an example of a functional configuration of the planning unit 32 according to the embodiment. The planning unit 32 according to the embodiment includes a GC candidate calculation unit 321, a posture calculation unit 322, an evaluation unit 323, and a generation unit 324.

The GC candidate calculation unit 321 calculates a GC candidate group by deep learning.

FIG. 4 is a diagram illustrating an example of the GC according to the embodiment. The example in FIG. 4 represents the GC in a case where the grasping posture of the handling tool portion 14 is projected onto an image when a grasping target object 104 is grasped from directly above. In one example, the GC is expressed by a rotated bounding box $\{x, y, w, h, \theta\}$ on the image. The parameters x and y indicate the center position of the handling tool portion 14, the parameter w indicates an opening width of the handling tool portion 14, the parameter h indicates a width of a finger of the handling tool portion 14, and the parameter $\theta$ indicates an angle formed by the opening width w of the GC and an image horizontal axis.

Returning to FIG. 1, the posture calculation unit 322 converts the GC ($\{x, y, w, h, \theta\}$) calculated by the GC candidate calculation unit 321 into a grasp posture in the world coordinate system in 6D ($\{X, Y, Z, \text{roll}, \text{pitch}, \text{yaw}\}$) of the handling tool portion 14. A relationship between the GC and the 6D posture is expressed by the following Equations (1) to (4) on the basis of a depth image ($I_{Depth}$), a camera matrix (IC), and information of a position and a posture ($T_{cam}^{world}$) of the camera in the world coordinate system. Note that a matrix $Rot_{cam}^{world}$ included in the matrix $T_{cam}^{world}$ is a rotation matrix of a $3\times3$ size camera, and $Trans_{cam}^{world}$ is a vector indicating the position of the camera, which is expressed by three rows and one column.

$$IC = \begin{bmatrix} c_x & 0 & f_x \\ 0 & c_y & f_y \\ 0 & 0 & 1 \end{bmatrix} \quad \cdots (1)$$

$$T_{cam}^{world} = \begin{bmatrix} Rot_{cam}^{world} & Trans_{cam}^{world} \\ 0 & 1 \end{bmatrix} \quad \cdots (2)$$

$$\begin{bmatrix} X \\ Y \\ Z \\ 1 \end{bmatrix} = T_{cam}^{world} \begin{bmatrix} \cos\theta & \sin\theta & 0 & (x - c_x)/f_x \\ -\sin\theta & \cos\theta & 0 & (x - c_y)/f_y \\ 0 & 0 & 1 & I_{Depth}(x, y) + D_{insertion\ amount} \\ 0 & 0 & 0 & 1 \end{bmatrix} \quad \cdots (3)$$

$$\begin{bmatrix} \cos yaw & -\sin yaw & 0 \\ \sin yaw & \cos yaw & 0 \\ 0 & 0 & 1 \end{bmatrix} \begin{bmatrix} \cos pitch & 0 & \sin pitch \\ 0 & 1 & 0 \\ \sin pitch & 0 & \cos pitch \end{bmatrix} \begin{bmatrix} 1 & 0 & 0 \\ 0 & \cos roll & -\sin roll \\ 0 & \sin roll & \cos roll \end{bmatrix} \quad \cdots (4)$$
$$= Rot_{cam}^{world} \begin{bmatrix} \cos\theta & \sin\theta & 0 \\ -\sin\theta & \cos\theta & 0 \\ 0 & 0 & 1 \end{bmatrix}$$

The GC and the 6D posture can be mutually converted by Equations (1) to (4) above. $D_{insertion\ amount}$ is an insertion amount when grasping is performed by the handling tool portion 14, and is determined by a fixed value or the shape and size of the grasping target object 104.

Moreover, in addition to the posture, the opening width W of the handling tool portion 14 in the world coordinate system can be easily obtained by converting an end point of a line segment of a projection w on the image of the opening width W into world coordinates according to Equation (3) and calculating a distance between the end points.

The evaluation unit 323 evaluates a score of easiness when grasping the grasping target object 104 in the posture of the handling tool portion 14. The score of grasping easiness is calculated by, for example, a heuristic evaluation formula in which the possibility of success, stability, and safety of grasping are considered in combination. In addition, the score of the grasping easiness is also obtained by directly using deep learning (see, for example, JP 7021160 B2). The evaluation unit 323 sorts the scores of easiness in descending order, and calculates a candidate group having higher scores or a candidate having the highest score.

The generation unit 324 generates the trajectory from the initial posture of the manipulator 1 to the candidate group having higher scores or the optimum posture of the handling tool portion 14 described above by using a planer of route planning, for example, MoveIt (Online, Searched on June 29, 2022, Internet "URL:https://moveit.ros.org/"), and transmits the trajectory and the score of easiness to the control unit 33.

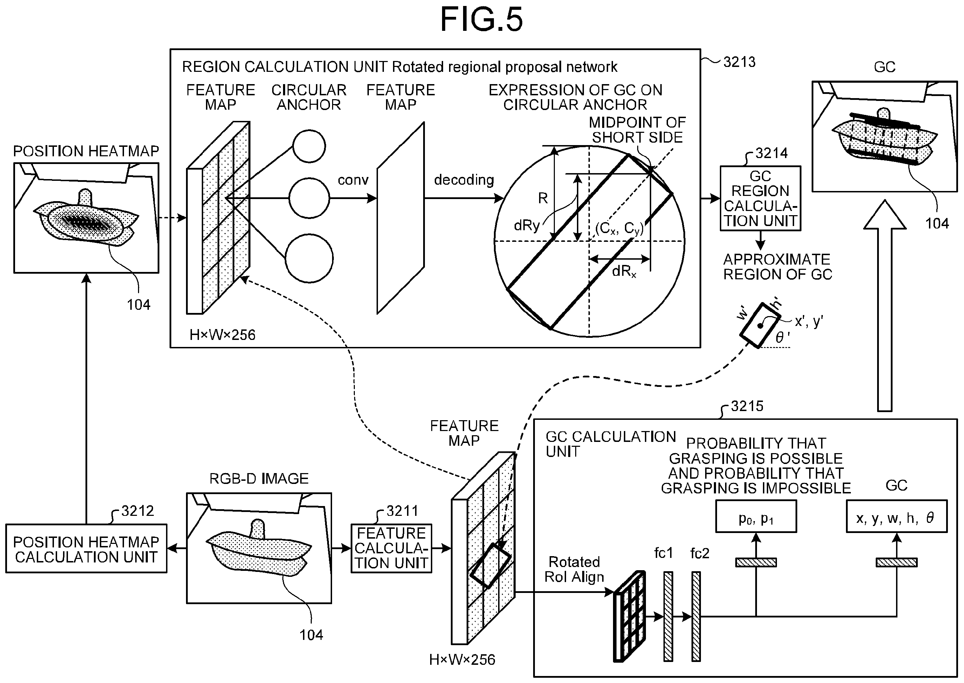

FIG. 5 is a diagram illustrating an example of a functional configuration of the GC candidate calculation unit 321 according to the embodiment. The GC candidate calculation unit 321 according to the embodiment includes a feature calculation unit 3211, a position heatmap calculation unit 3212, a region calculation unit 3213, a GC region calculation unit 3214, and a GC calculation unit 3215.

Upon receiving input of the RGB-D image from the processing unit 31, the feature calculation unit 3211 calculates a feature map of the image of target grasping objects. Specifically, the feature calculation unit 3211 enhances the accuracy of feature learning by using a neural network that fuses not only the last feature but also an intermediate feature. Note that, in the technology according to the related art, the feature is calculated by directly fusing the feature maps of last output layer (for example, the last feature map of a plurality of pieces of sensor information) calculated by the neural network, so that the role of the intermediate feature for the accuracy of a learning result has not been considered.

The feature calculation unit 3211 calculates the feature map by receiving input of a plurality of pieces of image sensor information, integrating a plurality of intermediate features extracted by a plurality of feature extractors from the pieces of image sensor information, and fusing features of the pieces of image sensor information including the intermediate features by convolution calculation. The pieces of image sensor information include, for example, a color image indicating a color of the image and a depth image indicating a distance from the camera to the object included in the image. The feature extractors are implemented by a neural network having an encoder-decoder model structure.

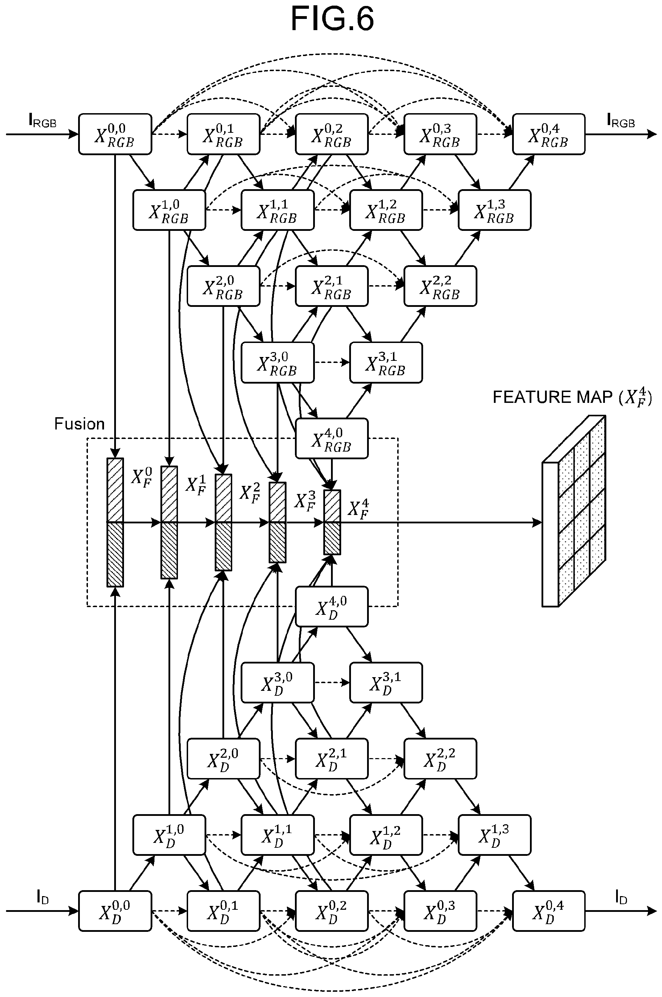

FIG. 6 is a diagram illustrating an example of processing in the feature calculation unit 3211 according to the embodiment. The example in FIG. 6 represents a case where the feature calculation unit 3211 uses the neural network having the encoder-decoder model structure. Specifically, in a network with triangular-like shape on the upper side of FIG. 6, the left half has a structure indicating processing in an encoder in which features of a color image $I_{RGB}$ are extracted, and the right half has a structure indicating processing in a decoder in which the color image $I_{RGB}$ is restored. Similarly, a network on the lower side of FIG. 6 has a structure in which the left half illustrates processing in the encoder in which features of a depth image $I_{Depth}$ are extracted, and has a structure in which the right half illustrates processing in the decoder in which the depth image $I_{Depth}$ is restored.

According to the embodiment, intermediate features ($X_{RGB}^{i,j}$ and $X_D^{i,j}$; i,j = f(0,0),(0,1),(0,2),(1,0),(1,1),(2,0),(2,1),(3,0),(4,0)}) obtained by the encoder are fused by the following Equation (5), and the feature map by the convolution calculation (Conv) is calculated.

$$X_F^k = \begin{cases} X_{RGB}^{0,0} + X_D^{0,0}, & k = 0 \\ Conv(X_F^{K-1}) + X_{RGB}^{K,0} + X_D^{K,0} + \sum_{n=0}^{K} X_{RGB}^{n\%2,n/2} + X_D^{n\%2,n/2}, & k > 0 \end{cases} \quad \cdots (5)$$

Returning to FIG. 5, the region calculation unit 3213 calculates an expression of the GC on a circular anchor by the neural network on the basis of the feature map. Note that, in the technology according to the related art, box-shaped anchors are generated at predetermined intervals with respect to the entire image, and the relative position and the relative rotation angle with respect to the anchor are learned. In this case, since the anchor for the entire image is generated, the calculation amount increases. In addition, it is necessary to generate boxes of a plurality of sizes and a plurality of rotation angles, and the number of parameters increases.

Considering the above, in the GC candidate calculation unit 321 of the present embodiment, the position heatmap calculation unit 3212 calculates a position heatmap indicating the success possibility of position for the handling tool to grasp target object 104, based on which box-shaped anchors only need to be generated in the area with high success possibility in an image instead of the entire image. The region calculation unit 3213 according to the embodiment is implemented by the neural network that detects the circular anchor on the feature map on the basis of the position heatmap and calculates a first parameter on the circular anchor. The region calculation unit 3213 generates the circular anchor in a region having a higher score of the position heatmap (a region larger than a threshold), whereby the region where the circular anchor is generated is narrowed down, and the calculation amount can be reduced. In addition, as illustrated in FIG. 5, by using a plurality of anchors having different sizes, it is possible to treat the grasping target objects 104 having different sizes.

The position heatmap calculation unit 3212 calculates the position heatmap by a neural network (for example, a fully connected neural network (FCN) and a U-Net) using an image as an input. Ground truth of the position heatmap is obtained from x and y of the GC. For example, a value of each point in the position heatmap is generated by calculating Gaussian distances from the position of each point to x and y of GC in the image.

In the present embodiment, the anchor having a circular shape is used. In a case of the circular shape, unlike a case of a box shape, it is not necessary to consider the angle, and it is sufficient if only circles of a plurality of sizes are generated, so that the number of parameters can be reduced. As a result, learning efficiency can be enhanced.

On the other hand, in the present embodiment, unlike previous studies angle degree of $\theta$ of CG is not directly regressed because there is a possibility that an inaccurate value of a loss function due to discontinuity occurs at the boundary, resulting in learning of the angle may become difficult. Considering this, the region calculation unit 3213 enhances learning performance by learning the center ($C_x$,$C_y$) and radius (R) of a circumscribed circle of the GC and coordinates ($dR_x$,$dR_y$) of a midpoint of a short side of the GC (for example, the center of "h") with respect to the center of the circle instead of the angle $\theta$.

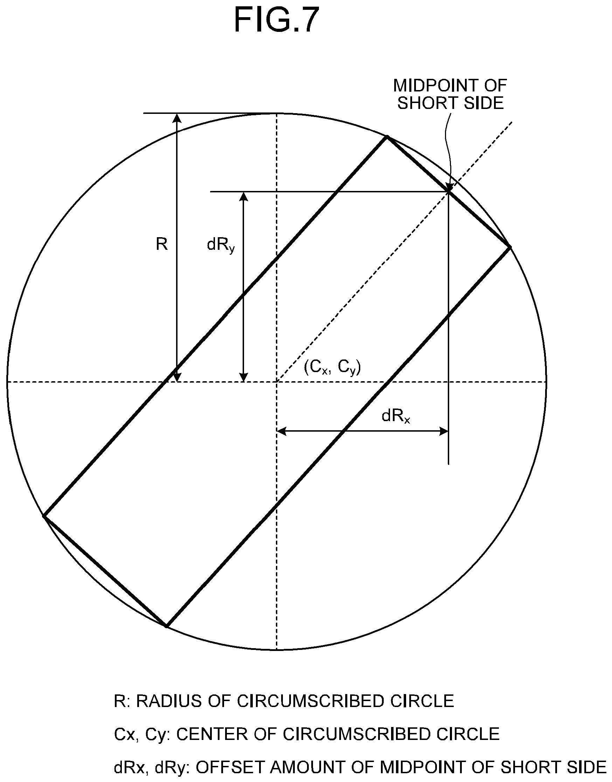

FIG. 7 is a diagram illustrating an example of processing in the GC region calculation unit 3214 according to the embodiment. The GC region calculation unit 3214 converts the expression of the GC on the circular anchor obtained by the learning into an approximate region ($\{x', y', w', h', \theta'\}$) of the GC by the following Equation (6).

$$
\begin{cases}
x = c_x \\
y = c_y \\
w = 2 * \sqrt{dR_x^2 + dR_y^2} \\
h = 2 * \sqrt{R^2 - \left(dR_x^2 + dR_y^2\right)} \\
\theta = arctan \dfrac{dR_y}{dR_x}
\end{cases} \quad \cdots (6)
$$

Returning to FIG. 5, when the GC region calculation unit 3214 calculates an approximate region of the GC, the GC calculation unit 3215 extracts features in the approximate region of the GC from the feature map, and performs pooling and alignment of the features by rotated region of interest (ROI) alignment. Then, the GC calculation unit 3215 inputs the features for which the pooling and the alignment have been performed to fully connected layers (fc1 and fc2 in the example of FIG. 5), and calculates the values ($\{x, y, w, h, \theta\}$) of the GC, a probability $p_0$ that grasping is possible, and a probability $p_1$ that grasping is impossible.

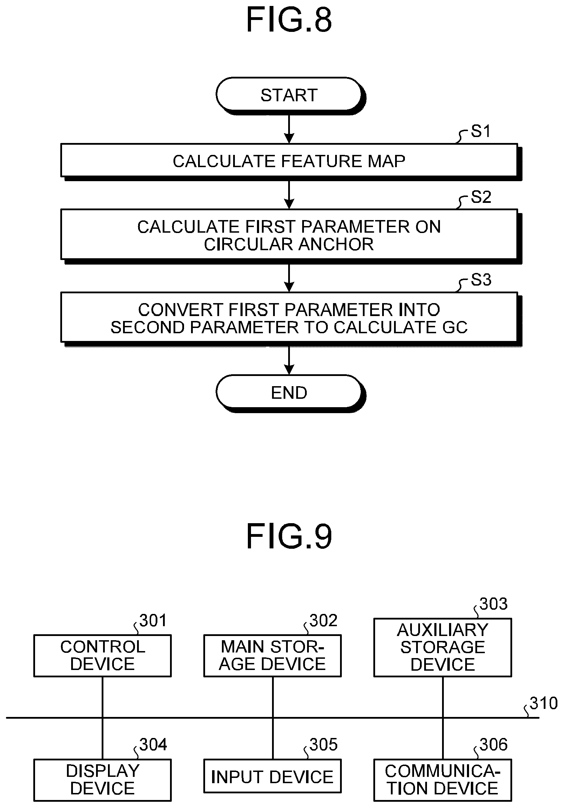

FIG. 8 is a flowchart illustrating an example of a handling method according to the embodiment. First, the feature calculation unit 3211 calculates the feature map indicating the features of the captured image of grasping target objects 104 (step S1).

Next, the region calculation unit 3213 calculates, on the basis of the feature map calculated in step S1, the expression of position and posture of the handling tool portion 14 capable of grasping the grasping target object 104 by the first parameter on the circular anchor in the image (step S2). In the example in FIG. 7 described above, the first parameter includes parameters $C_x$ and $C_y$ indicating the center of the circular anchor and a parameter R indicating the radius of the circular anchor.

Next, The GC region calculation unit 3214 calculated the approximate region of GC by convert a first parameter on a circular anchor to GC region.

Next, the GC calculation unit 3215 calculates the approximate region of GC of the handling tool portion 14 which is expressed as a second parameter indicating a position and a posture of the handling tool on the image on the basis of GC approximate region.. Specifically, the GC calculation unit 3215 calculates the second parameter ($\{x, y, w, h, \theta\}$ in Equation (6) above) from the parameter ($dR_x$ and $dR_y$ in the example of FIG. 7) indicating the midpoint of the side of the GC whose circumscribed circle is the circular anchor, the parameter ($C_x$ and $C_y$ in the example of FIG. 7) indicating the center of the circular anchor, and the parameter (R in the example of FIG. 7) indicating the radius of the circular anchor. Note that the handling method according to the above-described embodiment can be applied not only to a pinching-type handling tool but also to any handling tool that can be expressed by the rotated bounding box $\{x, y, w, h, \theta\}$ on the image.

As described above, with the object manipulation apparatus (the manipulator 1, the housing 2, and the controller 3) according to the embodiment, it is possible to more effectively utilize the intermediate features (for example, see FIG. 6) obtained by the neural network and more appropriately control operation of the object manipulation apparatus with a smaller calculation amount.

In the technology according to the related art, it is necessary to learn the rotation angle of the box, which is an expression of the posture of the handling tool on the image. In order to learn the rotation angle, it is necessary to generate a large number of rotated candidate boxes or classify the rotation angle (convert the angle into a high-dimensional one-hot vector), and thus, the calculation amount is enormous. On the other hand, when learning the rotation angle, learning has been difficult because two rotation angles (for example, an expression of a box having a rotation angle of 0 degrees on the image is the same as an expression of a box having a rotation angle of 180 degrees on the image) exist for the same rotated box due to the symmetry of the box.

Finally, an example of a diagram illustrating an example of a hardware configuration of the controller 3 according to the embodiment will be described.

Example of Hardware Configuration

FIG. 9 is a diagram illustrating an example of a hardware configuration of a diagram illustrating an example of a

## EP 4 316 742 B1

hardware configuration of the controller 3 according to the embodiment. The controller 3 according to the embodiment includes a control device 301, a main storage (or memory) device 302, an auxiliary storage device 303, a display device 304, an input device 305, and a communication device 306. The control device 301, the main storage device 302, the auxiliary storage device 303, the display device 304, the input device 305, and the communication device 306 are connected to each other through a bus 310.

Note that the display device 304, the input device 305, and the communication device 306 do not have to be included. For example, in a case where the controller 3 is connected to another device, a display function, an input function, and a communication function of other devices may be used.

The control device 301 executes a computer program read from the auxiliary storage device 303 to the main storage device 302. The control device 301 is, for example, one or more processors such as a central processing unit (CPU). The main storage device 302 is a memory such as a read only memory (ROM) and a random access memory (RAM). The auxiliary storage device 303 is a memory card, a hard disk drive (HDD), or the like.

The display device 304 displays information. The display device 304 is, for example, a liquid crystal display. The input device 305 receives input of the information. The input device 305 is, for example, a hardware key or the like. Note that the display device 304 and the input device 305 may be a liquid crystal touch panel or the like having both of a display function and an input function. The communication device 306 communicates with another device.

The computer program executed by the controller 3 is a file having an installable or executable format. The computer program is stored, as a computer program product, in a non-transitory computer-readable recording medium such as a compact disc read only memory (CD-ROM), a memory card, a compact disc recordable (CD-R), and a digital versatile disc (DVD) and is provided.

The computer program executed by the controller 3 may be configured to be stored on a computer connected to a network such as the Internet and be provided by being downloaded via the network. Alternatively, the computer program executed by the controller 3 may be configured to be provided via a network such as the Internet without being downloaded.

In addition, the computer program executed by the controller 3 may be configured to be provided in a state of being incorporated in advance in a ROM or the like.

The computer program executed by the controller 3 has a module configuration including a function that can be implemented by the computer program among functions of the controller 3.

Functions implemented by the computer program are loaded into the main storage device 302 by reading and executing the computer program from a storage medium such as the auxiliary storage device 303 by the control device 301. In other words, the functions implemented by the computer program are generated on the main storage device 302.

Note that some of the functions of the controller 3 may be implemented by hardware such as an integrated circuit (IC). The IC is, for example, a processor executing dedicated processing.

Moreover, in a case of implementing the respective functions using a plurality of processors, each processor may implement one of the functions, or may implement two or more of the functions.

While certain embodiments have been described, these embodiments have been presented by way of example only, and are not intended to limit the scope of the invention, that is defined in the appended claims. Indeed, the novel embodiments described herein may be embodied in a variety of other forms; moreover, various omissions, substitutions and changes in the form of the embodiments described herein may be made without departing from the scope of the claims. The accompanying claims are intended to cover such forms or modifications as would fall within their scopes.

### Claims

1.  An object manipulation apparatus (1, 2, 3) comprising:

    a feature calculation unit (3211) configured to calculate a feature map indicating a feature of a captured image of grasping target objects (104);
    a region calculation unit (3213) configured to calculate, on the basis of the feature map, a position and a posture of a handling tool (14) by a first parameter on a circular anchor in the image, the handling tool being capable of grasping the grasping target object; and
    a grasp configuration, GC, calculation unit (3215) configured to calculate a GC of the handling tool (14) by converting the position and the posture indicated by the first parameter into a second parameter indicating a position and a posture of the handling tool (14) on the image, wherein
    the first parameter includes a parameter indicating a center of the circular anchor and a parameter indicating a radius of the circular anchor, and
    the GC calculation unit (3215) is configured to calculate the second parameter from
    a parameter indicating a midpoint of a side of the GC whose circumscribed circle is the circular anchor,

7

the parameter indicating the center of the circular anchor, and
the parameter indicating the radius of the circular anchor.

2. The apparatus according to claim 1, wherein the feature calculation unit (3211) implements the calculation of the feature map by

receiving input of a plurality of pieces of image sensor information,
integrating a plurality of intermediate features extracted by a plurality of feature extractors from the plurality of pieces of image sensor information, and
fusing, by convolution calculation, features of the plurality of pieces of image sensor information including the plurality of intermediate features.

3. The apparatus according to claim 2, wherein

the plurality of pieces of image sensor information include a color image indicating a color of the image and a depth image indicating a distance from camera to objects in the image, and
the plurality of feature extractors is implemented by a neural network having an encoder-decoder model structure.

4. The apparatus according to any one of claims 1 to 3, further comprising a position heatmap calculation unit (3212) configured to calculate a position heatmap indicating success probability for grasping target object, wherein
the region calculation unit (3213) is implemented by a neural network detecting the circular anchor on the feature map on the basis of the position heatmap and calculating the first parameter on the detected circular anchor.

5. A handling method implemented by a computer, the method comprising:

calculating (S1) a feature map indicating a feature of an image on the basis of image sensor information including a grasping target object;
calculating (S2), on the basis of the feature map, a position and a posture of a handling tool by a first parameter on a circular anchor in the image, the handling tool being capable of grasping the grasping target object; and
calculating (S3) a grasp configuration, GC, of the handling tool by converting the position and the posture indicated by the first parameter into a second parameter indicating a position and a posture of the handling tool on the image, wherein
the first parameter includes a parameter indicating a center of the circular anchor and a parameter indicating a radius of the circular anchor, and
the second parameter is calculated from
a parameter indicating a midpoint of a side of the GC whose circumscribed circle is the circular anchor,
the parameter indicating the center of the circular anchor, and
the parameter indicating the radius of the circular anchor.

6. A computer program comprising computer-readable instructions to be executed by a computer, the instructions causing the computer to perform processing including:

calculating (S1) a feature map indicating a feature of an image on the basis of image sensor information including a grasping target object;
calculating (S2), on the basis of the feature map, a position and a posture of a handling tool by a first parameter on a circular anchor in the image, the handling tool being capable of grasping the grasping target object; and
calculating (S3) a grasp configuration (GC) of the handling tool by converting the position and the posture indicated by the first parameter into a second parameter indicating a position and a posture of the handling tool on the image, wherein
the first parameter includes a parameter indicating a center of the circular anchor and a parameter indicating a radius of the circular anchor, and
the second parameter is calculated from
a parameter indicating a midpoint of a side of the GC whose circumscribed circle is the circular anchor,
the parameter indicating the center of the circular anchor, and
the parameter indicating the radius of the circular anchor.

**Patentansprüche**

1.  Eine Vorrichtung zum Manipulieren von Objekten (1, 2, 3) umfassend:

    eine Einheit zum Berechnen von Merkmalen (3211), die dazu eingerichtet ist, eine Merkmalskarte zu berechnen, welche ein Merkmal eines erfassten Bildes von zu greifenden Zielobjekten (104) angibt;
    eine Einheit zum Berechnen von Bereichen (3213), die dazu eingerichtet ist, auf der Grundlage der Merkmalskarte eine Position und eine Ausrichtung eines Handhabungswerkzeugs (14) durch einen ersten Parameter auf einem kreisförmigen Anker in dem Bild zu berechnen, wobei das Handhabungswerkzeug in der Lage ist, das zu greifende Zielobjekt zu greifen; und
    eine Greifkonfigurations-, GC, Berechnungseinheit (3215), die dazu eingerichtet ist, eine GC des Handhabungswerkzeugs (14) zu berechnen, indem die durch den ersten Parameter angegebene Position und Ausrichtung in einen zweiten Parameter umgewandelt wird, welcher eine Position und eine Ausrichtung des Handhabungswerkzeugs (14) auf dem Bild angibt, wobei
    der erste Parameter einen Parameter, der einen Mittelpunkt des kreisförmigen Ankers angibt, und einen Parameter, der einen Radius des kreisförmigen Ankers angibt, umfasst, und
    die GC-Berechnungseinheit (3215) eingerichtet ist, um den zweiten Parameter zu berechnen aus
    einem Parameter, der einen Mittelpunkt einer Seite der GC angibt, deren umschriebener Kreis der kreisförmige Anker ist,
    dem Parameter, der den Mittelpunkt des kreisförmigen Ankers angibt, und
    dem Parameter, der den Radius des kreisförmigen Ankers angibt.

2.  Die Vorrichtung gemäß Anspruch 1, wobei die Einheit zum Berechnen von Merkmalen (3211) die Berechnung der Merkmalskarte implementiert durch

    das Empfangen einer Eingabe einer Mehrzahl von Informationen des Bildsensors,
    das Integrieren einer Mehrzahl von Zwischenmerkmalen, welche durch eine Mehrzahl von Merkmalsextraktoren aus der Mehrzahl von Informationen des Bildsensors extrahiert werden, und
    das Verschmelzen, durch das Berechnen einer Faltung, von Merkmalen der Mehrzahl von Informationen des Bildsensors einschließlich der Mehrzahl von Zwischenmerkmalen.

3.  Die Vorrichtung gemäß Anspruch 2, wobei

    die Mehrzahl von Informationen des Bildsensors ein Farbbild, das eine Farbe des Bildes angibt, und ein Tiefenbild, das einen Abstand von der Kamera zu Objekten in dem Bild angibt, umfasst, und
    die Mehrzahl von Merkmalsextraktoren durch ein neuronales Netz mit einer Encoder-Decoder Modellstruktur implementiert ist.

4.  Die Vorrichtung gemäß einem der Ansprüche 1 bis 3, außerdem umfassend eine Einheit zum Berechnen einer Positionsdichtekarte (3212), die dazu eingerichtet ist, eine Positionsdichtekarte zu berechnen, welche eine Erfolgswahrscheinlichkeit für das Greifen des Zielobjektes angibt, wobei
    die Einheit zum Berechnen von Bereichen (3213) durch ein neuronales Netzwerk implementiert ist, welches den kreisförmigen Anker auf der Merkmalskarte auf der Grundlage der Positionsdichtekarte erkennt und den ersten Parameter auf dem erkannten kreisförmigen Anker berechnet.

5.  Ein durch einen Computer implementiertes Handhabungsverfahren, wobei das Verfahren umfasst:

    das Berechnen (S1) einer Merkmalskarte, die ein Merkmal eines Bildes angibt, auf der Grundlage von Informationen des Bildsensors, die ein zu greifendes Zielobjekt umfassen;
    das Berechnen (S2), auf der Grundlage der Merkmalskarte, einer Position und einer Ausrichtung eines Handhabungswerkzeugs durch einen ersten Parameter auf einem kreisförmigen Anker in dem Bild, wobei das Handhabungswerkzeug in der Lage ist, das zu greifende Zielobjekt zu greifen; und
    das Berechnen (S3) einer Greifkonfiguration, GC, des Handhabungswerkzeugs durch Umwandeln der durch den ersten Parameter angegebenen Position und Ausrichtung in einen zweiten Parameter, welcher eine Position und eine Ausrichtung des Handhabungswerkzeugs auf dem Bild angibt, wobei
    der erste Parameter einen Parameter, der einen Mittelpunkt des kreisförmigen Ankers angibt, und einen Parameter, der einen Radius des kreisförmigen Ankers angibt, umfasst, und
    der zweite Parameter berechnet wird aus

einem Parameter, der einen Mittelpunkt einer Seite der GC angibt, deren umschriebener Kreis der kreisförmige Anker ist,

dem Parameter, der den Mittelpunkt des kreisförmigen Ankers angibt, und dem Parameter, der den Radius des kreisförmigen Ankers angibt.

**6.** Ein Computerprogramm, welches computerlesbare Anweisungen umfasst, die von einem Computer auszuführen sind, wobei die Anweisungen den Computer veranlassen, eine Verarbeitung durchzuführen, die umfasst:

das Berechnen (S1) einer Merkmalskarte, die ein Merkmal eines Bildes angibt, auf der Grundlage von Informationen des Bildsensors, die ein zu greifendes Zielobjekt umfassen;

das Berechnen (S2), auf der Grundlage der Merkmalskarte, einer Position und einer Ausrichtung eines Handhabungswerkzeugs durch einen ersten Parameter auf einem kreisförmigen Anker in dem Bild, wobei das Handhabungswerkzeug in der Lage ist, das zu greifende Zielobjekt zu greifen; und

das Berechnen (S3) einer Greifkonfiguration (GC) des Handhabungswerkzeugs durch Umwandeln der durch den ersten Parameter angegebenen Position und Ausrichtung in einen zweiten Parameter, welcher eine Position und eine Ausrichtung des Handhabungswerkzeugs auf dem Bild angibt, wobei

der erste Parameter einen Parameter, der einen Mittelpunkt des kreisförmigen Ankers angibt, und einen Parameter, der einen Radius des kreisförmigen Ankers angibt, umfasst, und

der zweite Parameter berechnet wird aus

einem Parameter, der einen Mittelpunkt einer Seite der GC angibt, deren umschriebener Kreis der kreisförmige Anker ist,

dem Parameter, der den Mittelpunkt des kreisförmigen Ankers angibt, und

dem Parameter, der den Radius des kreisförmigen Ankers angibt.

## Revendications

**1.** Dispositif de manipulation d'objet (1, 2, 3) comprenant :

une unité de calcul de caractéristique (3211) configurée pour calculer une carte de caractéristique indiquant une caractéristique d'une image capturée d'objets cibles à saisir (104) ;

une unité de calcul de région (3213) configurée pour calculer, sur la base de la carte de caractéristique, une position et une posture d'un outil de manipulation (14) à l'aide d'un premier paramètre sur un ancrage circulaire dans l'image, l'outil de manipulation étant capable de saisir l'objet cible à saisir ; et

une unité de calcul de configuration de préhension (3215) configurée pour calculer une configuration de préhension, GC, de l'outil de manipulation (14) en convertissant la position et la posture indiquées par le premier paramètre en un deuxième paramètre indiquant une position et une posture de l'outil de manipulation (14) sur l'image,

le premier paramètre comprenant un paramètre indiquant un centre de l'ancrage circulaire et un paramètre indiquant un rayon de l'ancrage circulaire, et

l'unité de calcul de GC (3215) est configurée pour calculer le deuxième paramètre à partir

d'un paramètre indiquant un point médian d'un côté de la GC dont le cercle circonscrit est l'ancrage circulaire,

du paramètre indiquant le centre de l'ancrage circulaire, et

du paramètre indiquant le rayon de l'ancrage circulaire.

**2.** Dispositif selon la revendication 1, dans lequel l'unité de calcul de caractéristique (3211) met en œuvre le calcul de la carte de caractéristique en

recevant en entrée une pluralité d'éléments d'informations de capteur d'image,

intégrant une pluralité de caractéristiques intermédiaires extraites par une pluralité d'extracteurs de caractéristique à partir de la pluralité d'éléments d'informations de capteur d'image, et

fusionnant, par un calcul de convolution, des caractéristiques de la pluralité d'éléments d'informations de capteur d'image comprenant la pluralité de caractéristiques intermédiaires.

**3.** Dispositif selon la revendication 2, dans lequel
la pluralité d'éléments d'informations de capteur d'image comprend une image en couleur indiquant une couleur de l'image et une image de profondeur indiquant une distance entre une caméra et des objets dans l'image, et
la pluralité d'extracteurs de caractéristique est mise en œuvre par un réseau neuronal présentant une structure de modèle encodeur-décodeur.

4. Dispositif selon l'une quelconque des revendications 1 à 3, comprenant en outre une unité de calcul de carte thermique de position (3212) configurée pour calculer une carte thermique de position indiquant une probabilité de réussite de préhension de l'objet cible à saisir,
l'unité de calcul de région (3213) étant mise en œuvre par un réseau neuronal détectant l'ancrage circulaire sur la carte de caractéristique sur la base de la carte thermique de position et calculant le premier paramètre sur l'ancrage circulaire détecté.

5. Procédé de manipulation mis en œuvre par un ordinateur, le procédé comprenant :

le calcul (S1) d'une carte de caractéristique indiquant une caractéristique d'une image sur la base d'informations de capteur d'image comprenant un objet cible à saisir ;
le calcul (S2), sur la base de la carte de caractéristique, d'une position et d'une posture d'un outil de manipulation à l'aide d'un premier paramètre sur un ancrage circulaire dans l'image, l'outil de manipulation étant capable de saisir l'objet cible à saisir ; et
le calcul (S3) d'une configuration de préhension, GC, de l'outil de manipulation en convertissant la position et la posture indiquées par le premier paramètre en un deuxième paramètre indiquant une position et une posture de l'outil de manipulation sur l'image,
le premier paramètre comprenant un paramètre indiquant un centre de l'ancrage circulaire et un paramètre indiquant un rayon de l'ancrage circulaire, et
le deuxième paramètre est calculé à partir
d'un paramètre indiquant un point médian d'un côté de la GC dont le cercle circonscrit est l'ancrage circulaire,
du paramètre indiquant le centre de l'ancrage circulaire, et
du paramètre indiquant le rayon de l'ancrage circulaire.

6. Programme informatique comprenant des instructions lisibles par ordinateur destinées à être exécutées par un ordinateur, lesdites instructions amenant l'ordinateur à effectuer un traitement comprenant :

le calcul (S1) d'une carte de caractéristique indiquant une caractéristique d'une image sur la base d'informations de capteur d'image comprenant un objet cible à saisir ;
le calcul (S2), sur la base de la carte de caractéristique, d'une position et d'une posture d'un outil de manipulation par un premier paramètre sur un ancrage circulaire dans l'image, l'outil de manipulation étant capable de saisir l'objet cible à saisir ; et
le calcul (S3) d'une configuration de préhension (GC) de l'outil de manipulation en convertissant la position et la posture indiquées par le premier paramètre en un deuxième paramètre indiquant une position et une posture de l'outil de manipulation sur l'image,
le premier paramètre comprenant un paramètre indiquant un centre de l'ancrage circulaire et un paramètre indiquant un rayon de l'ancrage circulaire, et
le deuxième paramètre est calculé à partir
d'un paramètre indiquant point médian d'un côté de la GC dont le cercle circonscrit est l'ancrage circulaire,
du paramètre indiquant le centre de l'ancrage circulaire, et
du paramètre indiquant le rayon de l'ancrage circulaire.

# FIG.1

EP 4 316 742 B1

# FIG.2

# FIG.3

PROCESSED IMAGE SENSOR
INFORMATION

┌─ 32
PLANNING
UNIT

┌─ 321
GC CANDIDATE
CALCULATION UNIT

┌─ 322
POSTURE
CALCULATION UNIT

┌─ 323
EVALUATION UNIT

┌─ 324
GENERATION UNIT

┌─ 33
CONTROL UNIT

# FIG.4

# FIG.5

EP 4 316 742 B1

# FIG.6

# FIG.7

R: RADIUS OF CIRCUMSCRIBED CIRCLE

Cx, Cy: CENTER OF CIRCUMSCRIBED CIRCLE

dRx, dRy: OFFSET AMOUNT OF MIDPOINT OF SHORT SIDE

# FIG.8

START

CALCULATE FEATURE MAP — S1

CALCULATE FIRST PARAMETER ON
CIRCULAR ANCHOR — S2

CONVERT FIRST PARAMETER INTO
SECOND PARAMETER TO CALCULATE GC — S3

END

# FIG.9

| | | |
|---|---|---|
| CONTROL DEVICE — 301 | MAIN STOR-AGE DEVICE — 302 | AUXILIARY STORAGE DEVICE — 303 |
| DISPLAY DEVICE — 304 | INPUT DEVICE — 305 | COMMUNICA-TION DEVICE — 306 |

— 310

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7021160 B

**Non-patent literature cited in the description**

- **XU YULIN et al.** GraspCNN: Real-Time Grasp Detection Using a New Oriented Diameter Circle Representation. IEEE ACCESS, vol. 7, 159322-159331